# EUROPÄISCHE PATENTSCHRIFT

(11) **EP 1 641 095 B1**
(45) Veröffentlichungstag und Bekanntmachung des Hinweises auf die Patenterteilung: **07.05.2008**
(21) Anmeldenummer: 05014505.1
(22) Anmeldetag: 05.07.2005
(51) Int. Cl.: H02G 3/06

(54) **Inneneck für Kabelkanäle**
Inside corner for raceways
Angle intérieur pour goulotte de câbles

(30) Priorität: 16.07.2004 DE 202004011188 U
(43) Veröffentlichungstag der Anmeldung: 29.03.2006
(73) Patentinhaber: Tehalit GmbH, 67716 Heltersberg (DE)
(72) Erfinder: Eberle, Patrick, 66292 Riegelsberg (DE)
(74) Vertreter: Patentanwälte Möll und Bitterich

(56) Entgegenhaltungen:
- EP-A- 1 102 375
- US-A- 6 002 087

## Beschreibung

Die Erfindung betrifft Innenecken zum Kaschieren der Lücke zwischen zwei in einem rechten Winkel stumpf gestoßenen Kabelkanälen gemäß dem Oberbegriff des Anspruchs 1.

Ein solches Inneneck ist bekannt aus der DE 299 20 280 U.

In der US 6,002,087 wird ein Inneneck für Kabelkanäle beschrieben, das aus zwei verwinkelten Teilen besteht die über ein Gelenk miteinander verbunden sind. Die beiden miteinander verbundenen Teile werden miteinander über ein Ausgleichselement verbunden, wobei deren Dreieckspitze kleiner als 90° ist.

Während das Verlegen von Leitungsführungskanälen in gerader Linie problemlos und schnell vonstatten geht, bereitet das Verlegen der Kanäle um Ecken, gleichgültig ob es sich dabei um Innenecken, Außenecken, Flachecken oder Abzweigungen handelt, Probleme. In den Ecken muss der Installateur die Kanalenden auf Gehrung schneiden, passgenau stoßen und befestigen. Auch bei exaktester Arbeit bleiben meist weniger schöne Schnittkanten sichtbar. Die Kanalhersteller bieten daher Abdeckprofile an, die diese Schnittkanten kaschieren. Dabei handelt es sich meist um Spritzgussteile. Diese Abdeckprofile werden mit Hilfe von Rast-, Schnapp- oder Steckverbindungen mit dem Kanaleck verbunden.

Vorgefertigte starre Abdeckprofile sind nur dann problemlos anwendbar, wenn der Winkel der Ecke möglichst exakt 90° beträgt. Nicht selten weichen jedoch die Winkel der Raumecken, in denen die Leitungsführungskanäle verlegt werden, vom rechten Winkel ab. In diesen Fällen müssen die von den Kanalherstellern ebenfalls angebotenen verstellbaren Abdeckprofile eingesetzt werden oder der Installateur muss die Ecke wieder in Handarbeit herstellen.

Leitungsführungskanäle werden mit unterschiedlichen Querschnitten angeboten. Aus Rationalisierungsgründen werden die Kanäle dabei entweder mit gleicher Breite und unterschiedlichen Höhen oder mit gleicher Höhe und unterschiedlichen Breiten produziert. Da die Abdeckprofile exakt passen müssen, um ihre Kaschierfunktion erfüllen zu können, muss für jeden Kanal eine eigene Abdeckprofilfamilie produziert, gelagert, verschickt, bestellt und montiert werden. Die Erfahrung zeigt, dass gerade bei der Bestellung oftmals Fehler gemacht werden. Diese Situation ist sowohl für den Hersteller als auch für den Installateur unbefriedigend.

Der vorliegenden Erfindung liegt die Aufgabe zugrunde, hier Abhilfe zu schaffen und Abdeckprofile in Form von Innenecken anzugeben, die auch bei Ecken, deren Winkel von 90° abweicht, verwendet werden können, die schnell montiert und demontiert sind, trotzdem fest sitzen und dabei stets ein ästhetisch einwandfreies Bild bieten.

Diese Aufgabe wird gelöst durch ein Inneneck mit den Merkmalen des Anspruchs 1.

Dank dieser Konstruktion braucht der Installateur das Inneneck lediglich noch auf den Kanalstoß aufzuschieben, worauf sich die federnd gelagerten Flügel selbsttätig an die Wand anlegen und jede auch unsymmetrische Abweichung optimal kaschieren.

Gemäß einer Weiterbildung der Erfindung bestehen die Schenkel aus zwei teleskopisch gegeneinander verschiebbaren Teilen. Damit lassen sich auch Kanäle mit unterschiedlichen Höhen mit einem einzigen Inneneck kaschieren.

Vorteilhafterweise sind die beiden Flügel des Ausgleichselements an ihrer Spitze durch eine elastische Leiste verbunden, die vorteilhafterweise so geformt ist, dass sie auf die Schwenkachse aufgerastet werden kann. Dies erleichtert und beschleunigt die werksseitige Montage des erfindungsgemäßen Innenecks.

Vorteilhafterweise sind die beiden Flügel durch eine angeformte Feder gespreizt. Auch dies dient dazu, Produktion und Montage zu beschleunigen. Am besten lässt sich dies bewerkstelligen, wenn das Ausgleichselement einstückig aus Kunststoff gespritzt wird.

Anhand der Zeichnung soll die Erfindung in Form eines Ausführungsbeispiels näher erläutert werden. Es zeigen jeweils in isometrischer Darstellung
- Fig. 1: ein komplettes Inneneck und
- Fig. 2: ein dazugehöriges Ausgleichselement.

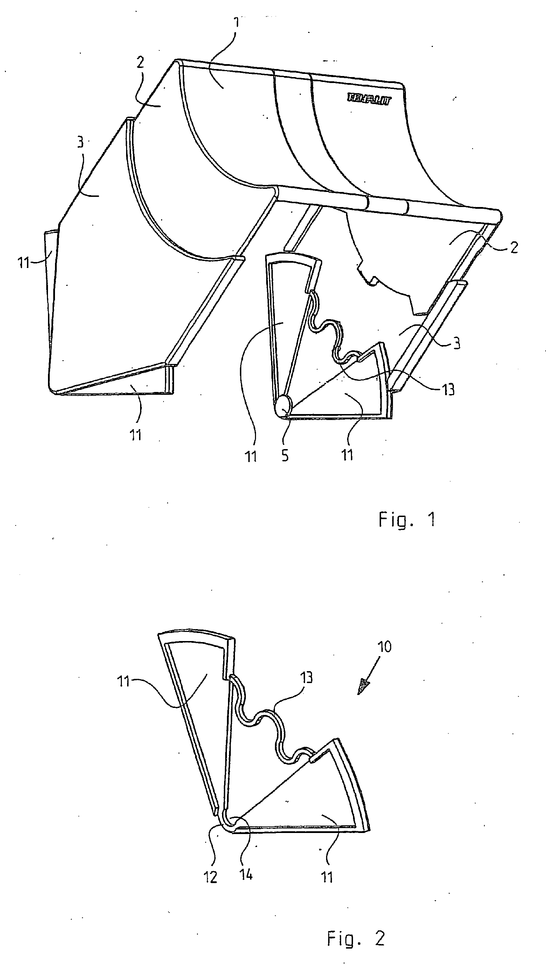

Fig. 1 zeigt in isometrischer Darstellung ein Inneneck zum Kaschieren der Lücke zwischen zwei etwa im rechten Winkel stumpf gestoßenen Kabelkanälen. Es handelt sich um ein U-förmiges Grundelement mit einem konkav gewölbten Steg 1 und zwei Schenkeln, die aus zwei teleskopisch gegeneinander verschiebbaren Teilen 2, 3 bestehen. Die freien Enden der Schenkel 3 sind als Dreieck gestaltet mit einem Dreieckswinkel kleiner als 90°.

An der Innenseite der Schenkelspitze ist eine Schwenkachse 5 angeformt. Auf diese ist ein Ausgleichselement 10 mit zwei federnd gespreizten Flügeln 11 aufgerastet. Die Flügel 11 schließen im dargestellten Ruhezustand einen Winkel größer als 90° ein.

Fig. 2 zeigt das Ausgleichselement 10. Man erkennt die beiden Flügel 11, die an ihrer Spitze durch eine elastische Leiste 12 verbunden sind. Zwischen den Flügeln 11 und der Leiste 12 ist eine Öffnung 14 gebildet, die auf die Schwenkachse 5 aufgerastet werden kann.

Gespreizt werden die beiden Flügel 11 durch eine einstückig angeformte Feder 13. Dank der Feder 13 und der freien Lagerung an der Schwenkachse 5 legen sich die Flügel 11 innerhalb der von der Konstruktion vorgegebenen Grenzen stets optimal an die Gebäudewände an, an denen der Kabelkanal montiert ist, gleichgültig ob sie einen Winkel von 90° oder mehr oder weniger einschließen. Dank der Teleskopierbarkeit der Schenkel 2, 3 lassen sich auch Höhendifferenzen ausgleichen bzw. Kabelkanäle mit unterschiedlichen Höhen kaschieren.

## Patentansprüche

1. Inneneck zum Kaschieren der Lücke zwischen zwei etwa im rechten Winkel stumpf gestoßenen Kabelkanälen, umfassend ein U-förmiges Abdeckelement mit einem Steg (1) und zwei Schenkeln (2, 3), deren freie Enden als Dreieck gestaltet sind, wobei der Winkel der Dreieckspitze kleiner als 90° ist, **dadurch gekennzeichnet, dass** an der Innenseite der Schenkelspitze eine Schwenkachse (5) angeformt ist und dass an der Schwenkachse (5) ein Ausgleichselement (10) mit zwei federnd gespreizten Flügeln (11) gelagert ist, die einen Winkel größer als 90° einschließen.

2. Inneneck nach Anspruch 1, **dadurch gekennzeichnet, dass** die Schenkel aus zwei teleskopisch gegeneinander verschiebbaren Teilen (2, 3) bestehen.

3. Inneneck nach Anspruch 1 oder 2, **dadurch gekennzeichnet, dass** die beiden Flügel (11) des Ausgleichselements (10) an der Spitze durch eine elastische Leiste (12) verbunden sind.

4. Inneneck nach Anspruch 3, **dadurch gekennzeichnet, dass** an der Innenseite der Leiste (12) eine Öffnung (14) gebildet ist, die auf die Schwenkachse (5) aufgerastet werden kann.

5. Inneneck nach einem der Ansprüche 1 bis 4, **dadurch gekennzeichnet, dass** die beiden Flügel (11) durch eine angeformte Feder (13) gespreizt sind.

6. Inneneck nach einem der Ansprüche 1 bis 5, **dadurch gekennzeichnet, dass** das Ausgleichselement (10) einstückig aus Kunststoff gespritzt ist.

## Claims

1. An internal corner for lining the gap between two cable conduits which are butt-jointed approximately at a right angle, comprising a U-shaped cover element with a web (1) and two arms (2,3), the free ends of which are in the form of a triangle, wherein the angle of the triangle's apex is smaller than 90°, **characterised in that** a pivot axis (5) is formed on the inside of the arm apex, and **in that** a compensating element (10) is mounted on the pivot axis (5) with two flexibly expanded wings (11) which form an angle greater than 90°.

2. An internal corner according to Claim 1, **characterised in that** the arms comprise two parts (2,3) which can be displaced telescopically relative to one another.

3. An internal corner according to Claim 1 or 2, **characterised in that** the two wings (11) of the compensating element (10) are connected at the apex by an elastic strip (12).

4. An internal corner according to Claim 3, **characterised in that** an opening (14), which can be engaged on the pivot axis (5), is formed on the inside of the strip (12).

5. An internal corner according to any one of Claims 1 to 4, **characterised in that** the two arms (11) are expanded by an integrally formed spring (13).

6. An internal corner according to any one of Claims 1 to 5, **characterised in that** the compensating element (10) is injected-moulded in one piece from plastics material.

## Revendications

1. Angle intérieur pour fermer l'intervalle entre deux goulottes de câbles assemblées bout à bout approximativement à angle droit, comprenant un élément de recouvrement en forme de U avec une aile médiane (1) et deux branches (2, 3) dont les extrémités libres sont conformées en triangle, l'angle de la pointe du triangle étant inférieur à 90°, **caractérisé en ce qu'**un axe de pivotement (5) est réalisé sur la face interne de l'extrémité des branches et **en ce qu'**un élément compensateur (10) doté de deux ailes (11) écartées avec ressort et formant un angle supérieur à 90° est monté au niveau de l'axe de pivotement (5).

2. Angle intérieur selon la revendication 1, **caractérisé en ce que** les branches sont composées deux parties (2, 3) mobiles de façon télescopique l'une par rapport à l'autre.

3. Angle intérieur selon la revendication 1 ou 2, **caractérisé en ce que** les deux ailes (11) de l'élément compensateur (10) sont reliées au niveau de la pointe par une nervure élastique (12).

4. Angle intérieur selon la revendication 3, **caractérisé en ce que** sur la face interne de la nervure (12) est formée une ouverture (14) pouvant être enclenchée sur l'axe de pivotement (5).

5. Angle intérieur selon l'une des revendications 1 à 4, **caractérisé en ce que** les deux ailes (11) sont écartées par un ressort (13) formé sur celles-ci.

6. Angle intérieur selon l'une des revendications 1 à 5, **caractérisé en ce que** l'élément compensateur (10) est un élément d'un seul tenant en matière plastique moulée par injection.
